# EUROPEAN PATENT APPLICATION

(11) **EP 4 333 284 A1**
(43) Date of publication of application: **06.03.2024**
(21) Application number: 22794489.9
(22) Date of filing: 30.03.2022
(51) Int. Cl.: H02M 1/42

(54) **ELECTRONIC DEVICE CONTROL METHOD AND APPARATUS, ELECTRONIC DEVICE, AND COMPUTER STORAGE MEDIUM, AND PROGRAM**

(30) Priority: 26.04.2021 CN 202110453624
(71) Applicant: Foshan Shunde Midea Electric Science and Technology Co., Ltd., Foshan, Guangdong 528300 (CN); GD Midea Air-Conditioning Equipment Co., Ltd., Foshan, Guangdong 528311 (CN)
(72) Inventor: ZHAO, Ming, Foshan, Guangdong 528300 (CN); HUANG, Zhaobin, Foshan, Guangdong 528300 (CN); LONG, Tan, Foshan, Guangdong 528300 (CN); WEN, Xianshi, Foshan, Guangdong 528300 (CN); WEI, Dong, Foshan, Guangdong 528300 (CN); HUANG, Zhenghui, Foshan, Guangdong 528300 (CN)
(74) Representative: Whitlock, Holly Elizabeth Ann
(86) International application number: PCT/CN2022/084196
(87) International publication number: WO 2022/228016

(57) **Abstract**

Embodiments of the present application disclose an electronic device control method and apparatus, an electronic device, a computer storage medium, and a computer program. The electronic device control method comprises: obtaining a working mode of an electronic device; determining a running time period of a first load according to the working mode of the electronic device; and within the running time period of the first load, controlling a PFC circuit to output a first half-bus voltage, wherein the first half-bus voltage represents the power supply voltage of the first load.

## Description

### CROSS-REFERENCE TO RELATED APPLICATION

This application is based on and claims priority to Chinese Patent Application No. 202110453624.9, entitled "CONTROL METHOD AND CONTROL APPARATUS OF ELECTRONIC DEVICE, ELECTRONIC DEVICE, COMPUTER STORAGE MEDIUM, AND COMPUTER PROGRAM", and filed on April 26, 2021, the entire contents of which are incorporated herein by reference.

### FIELD

The present disclosure relates to the field of power supply control, and relates to, but is not limited to, a control method and a control apparatus of an electronic device, an electronic device, a computer storage medium, and a computer program.

### BACKGROUND

At present, the power factor correction (PFC) technology is widely used. In the related art, a three-level three-phase active PFC circuit may be applied in an air conditioner. As for a load of the air conditioner, a full-bus voltage is generally used to supply power to a drive section of a compressor, and single-phase electric power is collected and rectified at an alternating current side to supply power to a drive section of a fan. However, this solution may result in a problem of three-phase current imbalance during operation of the air conditioner. Further, to ensure that current harmonics are in line with the standard, single-phase power supply of the fan requires use of a large reactance alone.

### SUMMARY

Embodiments of the present disclosure provide a control method and a control apparatus of an electronic device, an electronic device, a computer storage medium, and a computer program, which can solve problems of three-phase current imbalance and the requirement for a large reactance for power supply of a fan in the related art.

The embodiments of the present disclosure provide a control method of an electronic device. The control method is applied in a control apparatus of the electronic device. The electronic device represents a device powered by a PFC circuit, and includes a first load powered by half-bus voltages and a second load powered by a full-bus voltage. The control method includes: obtaining an operation mode of the electronic device; determining an operation period of the first load based on the operation mode of the electronic device; and controlling the PFC circuit to output a first half-bus voltage of the half-bus voltages during the operation period of the first load. The first half-bus voltage represents a supply voltage of the first load.

In some embodiments, the control method further includes: determining a switching time of at least one state switching based on the operation mode of the electronic device, in which the at least one state switching represents switching of the second load between a first state and a second state, the first state and the second state respectively represent a turn-on state and a turn-off state or the first state and the second state respectively represents an operation state at a first operation frequency and an operation state at a second operation frequency, and the second operation frequency is smaller than the first operation frequency; determining, based on the switching time of each of the at least one state switching, an operation-stopping period of the first load corresponding to each of the at least one state switching, the operation-stopping period of the first load corresponding to each of the at least one state switching includes the switching time of each of the at least one state switching; and controlling the first load to stop operation during the operation-stopping period of the first load corresponding to each of the at least one state switching.

In some embodiments, the at least one state switching represents switching of the second load from the first state into the second state. The determining, based on the switching time of each of the at least one state switching, the operation-stopping period of the first load corresponding to each of the at least one state switching includes: determining, based on the switching time of each of the at least one state switching, that the operation-stopping period of the first load includes a first predetermined duration before the switching time of each of the at least one state switching and/or a second predetermined duration after the switching time of each of the at least one state switching.

In some embodiments, the at least one state switching represents switching of the second load from the second state into the first state. The determining, based on the switching time of each of the at least one state switching, the operation-stopping period of the first load corresponding to each of the at least one state switching includes: determining, based on the switching time of each of the at least one state switching, that the operation-stopping period of the first load includes a third predetermined duration before the switching time of each of the at least one state switching and/or a fourth predetermined duration after the switching time of each of the at least one state switching.

In some embodiments, the first load is a fan, and the second load is a compressor. The determining the switching time of the at least one state switching based on the operation mode of the electronic device includes: determining, in response to determination that the electronic device is switched from an other operation mode to a defrosting mode, a switching time at which the compressor is switched from the first state into the second state, in which the other operation mode represents at least one of operation modes of the electronic device other than the defrosting mode; and determining, in response to determination that the electronic device is switched from the defrosting mode to the other operation mode, a switching time at which the compressor is switched from the second state into the first state.

In some embodiments, the electronic device includes a four-way valve configured to switch the operation mode of the electronic device. The control method further includes: controlling, in response to determination that the electronic device is switched from the other operation mode to the defrosting mode, the four-way valve to be switched from an energized state to a non-energized state in a period during which the compressor is in the second state; and controlling, in response to determination that the electronic device is switched from the defrosting mode to the other operation mode, the four-way valve to be switched from the non-energized state to the energized state in the period during which the compressor is in the second state.

The embodiments of the present disclosure further provide a control apparatus of an electronic device. The control apparatus includes a memory, a processor, and a computer program stored on the memory and executable by the processor. The processor is configured to implement, when executing the computer program, the control method of any one of the above embodiments.

The embodiments of the present disclosure further provide an electronic device. The electronic device includes the above control apparatus of the electronic device, the first load powered by the half-bus voltages, and the second load powered by the full-bus voltage.

The embodiments of the present disclosure further provide a computer storage medium. The computer storage medium has at least one program stored thereon. The at least one program is executable by at least one processor to implement the control method of any one of the above embodiments.

The embodiments of the present disclosure further provide a computer program. The computer program includes a computer-readable code. When the computer-readable code runs on a control apparatus of an electronic device, a processor of the control apparatus of the electronic device performs the control method of any one of the above embodiments.

The embodiments of the present disclosure provide the control method and control apparatus of the electronic device, the electronic device, and the computer storage medium. The electronic device represents the device powered by the PFC circuit, and includes a first load powered by half-bus voltages and a second load powered by a full-bus voltage. The control method includes: obtaining an operation mode of the electronic device; determining an operation period of the first load based on the operation mode of the electronic device; and controlling the PFC circuit to output a first half-bus voltage of the half-bus voltages during the operation period of the first load, the first half-bus voltage representing a supply voltage of the first load.

In view of the above, corresponding electric energy is obtained based on the first half-bus voltage outputted by the PFC circuit during operation of the first load. Compared with the solution of obtaining electric energy of rectified single-phase electric power in the related art, the solution of the present disclosure is more conducive to achieving three-phase current balance since electric energy of a rectified three-phase alternating current can be obtained. In addition, considering that the PFC circuit can be used for harmonic resonance processing, conformity of current harmonics to the standard can be facilitated.

It should be understood that the above general description and the following detailed description are exemplary and explanatory only, and are not intended to limit the present disclosure.

### BRIEF DESCRIPTION OF THE DRAWINGS

The accompanying drawings, which are incorporated in and constitute part of this specification, illustrate embodiments consistent with the present disclosure and are used in conjunction with the specification to explain the technical solutions of the present disclosure.
FIG. 1 is a schematic diagram of a topology structure for supplying power to an electronic device through a three-phase active PFC circuit according to an embodiment of the present disclosure.
FIG. 2A is a schematic diagram of a combination form of power switches according to an embodiment of the present disclosure.
FIG. 2B is a schematic diagram of another combination form of power switches according to an embodiment of the present disclosure.
FIG. 2C is a schematic diagram of yet another combination form of power switches according to an embodiment of the present disclosure.
FIG. 3 is a schematic diagram of another topology structure for supplying power to an electronic device through a three-phase active PFC circuit according to an embodiment of the present disclosure.
FIG. 4 is a flowchart of a control method of an electronic device according to an embodiment of the present disclosure.
FIG. 5 is another flowchart of a control method of an electronic device according to an embodiment of the present disclosure.
FIG. 6 is a schematic switching timing diagram of an air conditioner when switching between a defrosting mode and a heating mode according to an embodiment of the present disclosure.
FIG. 7 is another schematic switching timing diagram of an air conditioner when switching between a defrosting mode and a heating mode according to an embodiment of the present disclosure.
FIG. 8 is a schematic structural diagram of a control apparatus of an electronic device according to an embodiment of the present disclosure.

### DETAILED DESCRIPTION OF THE EMBODIMENTS

Technical solutions according to embodiments of the present disclosure will be described below clearly and completely in combination with accompanying drawings of the embodiments of the present disclosure.

The embodiments of the present disclosure may be applied in an electronic device powered by a PFC circuit. The PFC circuit may be configured to supply power to a load of the electronic device. The electronic device may be, for example, a home device, such as a refrigerator, an air conditioner, and an electric cooker. The PFC circuit may be, for example, a three-phase active PFC circuit.

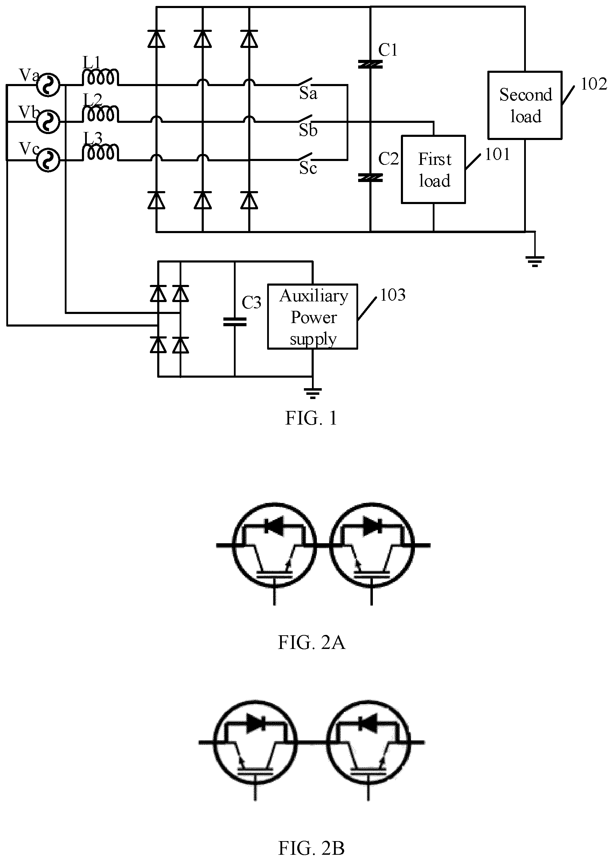

FIG. 1 is a schematic diagram of a topology structure for supplying power to an electronic device through a three-phase active PFC circuit according to an embodiment of the present disclosure. As illustrated in FIG. 1, Va, Vb and Vc represent input voltages of a three-phase alternating current, respectively. The three-phase alternating current represents three electrical signals with the same frequency, the same potential amplitude, and a phase difference of 120° from one another.

In an embodiment of the present disclosure, the inputted three-phase alternating current is processed by a first inductor L1, a second inductor L2, and a third inductor L3, respectively, and is then rectified by a three-level converter. As illustrated in FIG. 1, the three-level converter may include three bidirectional-conduction power switch combinations Sa, Sb, and Sc. Sa, Sb and Sc represent the power switch combinations corresponding to Va, Vb, and Vc, respectively. In an embodiment, a power switch of the power switch combination may be a metal-oxide-semiconductor field-effect transistor (MOSFET) device or an insulated gate bipolar transistors (IGBT) device of a silicon (Si) material, an MOS device of a silicon carbide (SiC) material, or an MOS device of a gallium nitride (GaN) material, which is not limited in the embodiments of the present disclosure.

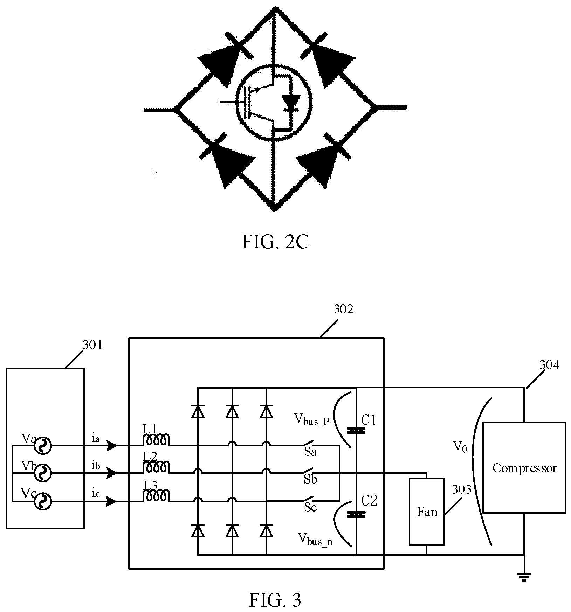

For example, combination forms of the power switches may be combination forms illustrated in FIG. 2A to FIG. 2C. FIG. 2A is a schematic diagram of a combination form of power switches according to an embodiment of the present disclosure. FIG. 2B is a schematic diagram of another combination form of power switches according to an embodiment of the present disclosure. FIG. 2C is a schematic diagram of yet another combination form of power switches according to an embodiment of the present disclosure. The embodiments of the present disclosure are not limited thereto.

In an embodiment of the present disclosure, two half-bus voltages at a direct current side of the three-level converter include an upper half-bus voltage and a lower half-bus voltage. Referring to FIG. 1, a first capacitor C1 at the direct current side of the three-level converter is an upper half-bus capacitor, and a voltage across two ends of the first capacitor C1 is the upper half-bus voltage. Moreover, a second capacitor C2 at the direct current side of the three-level converter is a lower half-bus capacitor, and a voltage across two ends of the second capacitor C2 is the lower half-bus voltage.

A voltage across two ends of a branch consisting of the first capacitor C1 and the second capacitor C2 is a full-bus voltage, which may be briefly referred to as a bus voltage. In an embodiment, the upper half-bus voltage or the lower half-bus voltage is half of the bus voltage. It can be understood that the remaining unknown voltage value can be obtained based on two known voltage values of the upper half-bus voltage, the lower half-bus voltage, and the bus voltage.

It can be understood by those skilled in the art that the bus voltage, the upper half-bus voltage and the lower half-bus voltage may be regarded as supply voltages for the load.

In an embodiment of the present disclosure, as illustrated in FIG. 1, a first load 101 of the electronic device represents a load powered by the lower half-bus voltage, and a second load 102 of the electronic device represents a load powered by the full-bus voltage.

For example, the loads of the electronic device further include another load rather than the first load 101 and the second load 102. The other load has a small power, and may be powered by an auxiliary power supply 103 after performing rectification on the auxiliary power supply 103. In FIG. 1, a capacitor that is connected in parallel with the auxiliary power supply is a third capacitor C3.

For example, the first capacitor C1, the second capacitor C2 and the third capacitor C3 may be electrolytic capacitors or other type of capacitors.

In an application, the electronic device is an air conditioner, the first load is a fan, and the second load is a compressor. FIG. 3 is a schematic diagram of another topology structure for supplying power to an electronic device through a three-phase active PFC circuit according to an embodiment of the present disclosure. As illustrated in FIG. 3, the three-phase active PFC circuit may include an input power supply module 301, a three-phase three-level rectifier module 302, a fan 303, and a compressor 304.

The input power supply module 301 is configured to input a three-phase current to the three-phase three-level rectifier module 302. In FIG. 3, ia, ib and ic represent inputted three-phase currents, respectively. Meanings of Va, Vb and Vc have been explained in the foregoing description.

In an embodiment, the three-phase three-level rectifier module 302 may be a T-type three-level converter. A topology structure of the three-phase three-level rectifier module 302 may be Vienna topology, and the three-phase three-level rectifier module 302 is configured to convert an alternating-current signal into a direct-current signal.

In the three-phase three-level rectifier module 302, the first capacitor C1 is the upper half-bus capacitor, and the second capacitor C2 is the lower half-bus capacitor. A voltage across two ends of the first capacitor C1 is the upper half-bus voltage Vbus_p. A voltage across two ends of the second capacitor C2 is the lower half-bus voltage Vbus_n.

A supply voltage of the fan 303 is the lower half-bus voltage Vbus_n, i.e., the fan is a half-bus voltage load. In this case, the lower half-bus voltage is used to supply power to a drive section of the fan. In another embodiment, the upper half-bus voltage may be used to supply power to the drive section of the fan.

A supply voltage of the compressor 304 is the full-bus voltage V0, i.e., the compressor is a full-bus voltage load. In this case, the full-bus voltage is used to supply power to a drive section of the compressor.

In an embodiment, the three-phase active PFC circuit illustrated in FIG. 3 may further include a voltage and current collection module (not illustrated in FIG. 3). In an implementation, the voltage and current collection module is configured to collect input currents of at least two phases, at least two branches of input phase voltages or line voltages, and at least two bus voltages (i.e., at least two of the bus voltage, the upper half-bus voltage, and the lower half-bus voltage). In another implementation, the voltage and current collection module is configured to collect a three-phase input current, a three-way input phase voltage, a bus voltage, an upper half-bus voltage, and a lower half-bus voltage.

In the embodiment of the present disclosure, an operation mode of the three-phase active PFC circuit is related to operation states of various loads. For example, when the first load operates alone, the operation mode of the three-phase active PFC circuit is a half-bus mode, i.e., only a half-bus voltage is used to supply power to the first load. When the second load operates alone or the first load and the second load operate simultaneously, the operation mode of the three-phase active PFC circuit is a full-bus mode, i.e., a full-bus voltage is required for supplying power to the second load.

It should be noted that the circuit structures illustrated in FIG. 1 and FIG. 3 are only exemplary circuit structures of the embodiments of the present disclosure. Applications of the embodiments of the present disclosure are not limited to the circuit structures illustrated in FIG. 1 and FIG. 3.

The present disclosure will be further described in detail below with reference to the accompanying drawings and embodiments. It should be understood that the embodiments provided herein are only used to explain the present disclosure, instead of limiting the present disclosure. In addition, the embodiments provided below are used to partially implement the embodiments of the present disclosure, rather than providing all embodiments of the present disclosure. The technical solutions described in the present disclosure can be combined arbitrarily without mutual contradiction.

It should be noted that, in the present disclosure, terms "comprise", "include" or any other variations thereof are intended to cover non-exclusive including, such that the method or apparatus including a series of elements does not only include those elements, but also include other elements that are not explicitly listed, or also include inherent elements of the implementation method or apparatus. In a case that there is no more restriction, an element defined by the statement "includes a ..." does not exclude the presence of additional identical elements (for example, a step in a method or a unit in an apparatus, like the unit in the apparatus may be a part of a processor, a part of a program, or software) in the method or apparatus that includes the said element.

In the present disclosure, the term "and/or" only represents a relationship between correlated objects, including three relationships. For example, "A and/or B" may represent three situations, i.e., A alone, B alone, or both A and B. In addition, the term "at least one" in the present disclosure represents any combination of at least two of any one or more of various elements, for example, including at least one of A, B, or C, which may represent one or more elements selected from a group consisting of A, B, and C.

For example, a control method of an electronic device provided in the embodiments of the present disclosure includes a series of steps, but is not limited to the described steps. Similarly, a control apparatus of an electronic device provided in the embodiments of the present disclosure includes a series of modules. However, the control apparatus of the electronic device provided in the embodiments of the present disclosure includes explicitly described modules, and may further include modules that need to be configured to obtain related information or perform processing based on information.

In the embodiments of the present disclosure, an execution subject of a control method of the electronic device may be the control apparatus of the electronic device. The control apparatus of the electronic device may be described in the general context of computer system executable instructions (such as a program module) that are executed by a computer system. In general, the program module may include routines, procedures, a target program, components, logics, data structures, and the like that perform a specific task or implement a specific abstract data type. The computer system may be implemented in a distributed cloud computing environment where tasks are performed by a remote processing device linked through a communication network. In the distributed cloud computing environment, the program module may be located on a local or remote computing system storage medium that includes a storage device.

In an embodiment of the present disclosure, the control method of the electronic device may be implemented by a processor of the control apparatus of the electronic device. The above processors can be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor.

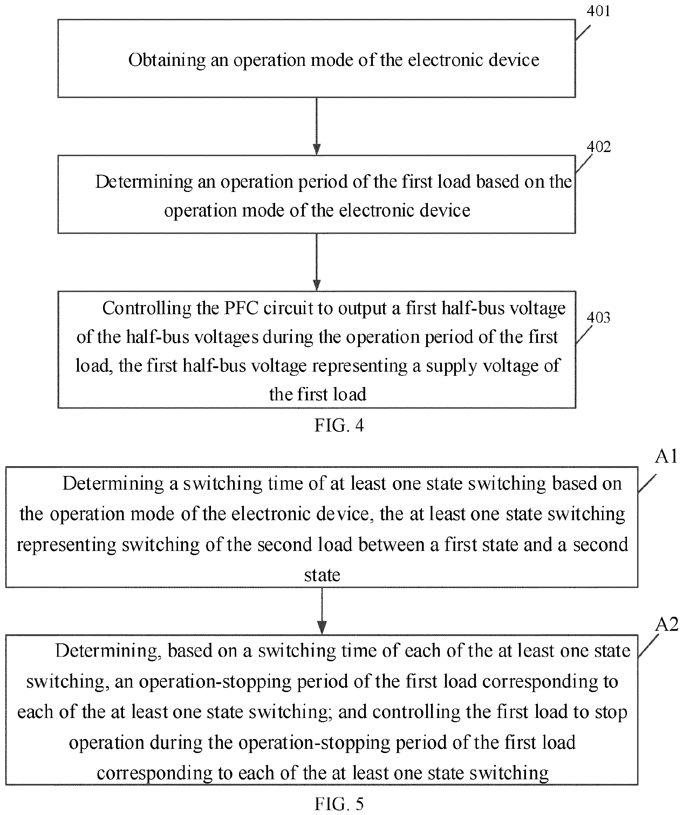

FIG. 4 is a flowchart of a control method of an electronic device according to an embodiment of the present disclosure. The electronic device represents a device powered by a PFC circuit. The electronic device includes a first load powered by half-bus voltages and a second load powered by a full-bus voltage. As illustrated in FIG. 4, a process of the control method of the electronic device includes operations at blocks 401 to 403.

At block 401, an operation mode of the electronic device is obtained.

In an embodiment of the present disclosure, the operation mode of the electronic device may be a mode determined based on a function of the electronic device. The electronic device may have a plurality of operation modes.

For example, when the electronic device is an air conditioner, the operation mode of the electronic device may include a cooling mode, a heating mode, a defrosting mode, and the like.

At block 402, an operation period of the first load is determined based on the operation mode of the electronic device.

For example, how loads of the electronic device operate in cooperation with one another may be determined based on the operation mode of the electronic device, to determine an operation period of each of loads of the electronic device.

As an example, the electronic device is the air conditioner. When the operation mode of the electronic device is the heating mode, both the compressor and the fan need to operate simultaneously for at least part of a period during which the electronic device is in the heating mode. When the operation mode of the electronic device is the defrosting mode, the fan needs to be turned off and the compressor needs to be turned on for at least part of a period during which the electronic device is in the defrosting mode. In this way, the operation period of the fan can be determined based on the operation mode of the electronic device.

At block 403, the PFC circuit is controlled to output a first half-bus voltage during the operation period of the first load. The first half-bus voltage represents a supply voltage of the first load.

In the embodiment of the present disclosure, when the PFC circuit is controlled to output the first half-bus voltage, the first load may obtain corresponding electric energy based on the first half-bus voltage.

In an embodiment, when the first load is the fan, the fan obtains electric energy based on the first half-bus voltage outputted from the PFC circuit instead of obtaining electric energy of rectified single-phase electric power. That is, the fan is turned on for operation after the PFC circuit is turned on for operation. It should be understood that the condition that the PFC circuit is turned on for operation facilitates to obtain a sufficient voltage required for operation by the fan and facilitates to maintain a normal operation state of the fan.

It can be seen that, in the embodiment of the present disclosure, corresponding electric energy is obtained based on the first half-bus voltage outputted by the PFC circuit during operation of the first load. Compared with the solution of obtaining electric energy of rectified single-phase electric power in the related art, the solution of the present disclosure is more conducive to achieving three-phase current balance since electric energy of a rectified three-phase alternating current can be obtained. In addition, considering that the PFC circuit can be used for harmonic resonance processing, conformity of current harmonics to the standard can be facilitated.

FIG. 5 is another flowchart of a control method of an electronic device according to an embodiment of the present disclosure. As illustrated in FIG. 5, the above control method of the electronic device further includes operations at blocks A1 and A2.

At block A1, a switching time of at least one state switching is determined based on the operation mode of the electronic device. The at least one state switching represents switching of the second load between a first state and a second state.

In some examples, the first state and the second state represent a turn-on state and a turn-off state, respectively. In other examples, the first state and the second state represent an operation state at a first operation frequency and an operation state at a second operation frequency, respectively. The second operation frequency is smaller than the first operation frequency. The first state may represent a normal operation state of the second load, and the second state may represent a low frequency operation state of the second load.

For example, when the operation mode of the electronic device is switched, the operation state of the second load may need to be switched. That is, the second load is required to be switched between the first state and the second state.

As an example, the electronic device is the air conditioner and the second load is the compressor. When the operation mode of the electronic device is switched from the heating mode to the defrosting mode, the compressor needs to be switched from the turn-on state into the turn-off state, and is then switched from the turn-off state into the turn-on state after a period. When the operation mode of the electronic device is switched from the defrosting mode to the heating mode, the compressor needs to be switched from the turn-on state into the turn-off state, and is then switched from the turn-off state into the turn-on state after a period.

As an example, the electronic device is the air conditioner and the second load is the compressor. When the operation mode of the electronic device is switched from the heating mode to the defrosting mode, the compressor needs to be switched from the operation state at the first operation frequency into the operation state at the second operation frequency, and is then switched from the operation state the second operation frequency into the operation state at the first operation frequency after a period. When the operation mode of the electronic device is switched from the defrosting mode to the heating mode, the compressor needs to be switched from the operation state at the first operation frequency into the operation state at the second operation frequency, and is then switched from the operation state at the second operation frequency into the operation state at the first operation frequency after a period.

At block A2, an operation-stopping period of the first load corresponding to each of the at least one state switching is determined based on the switching time of each of the at least one state switching, and the first load is controlled to stop operation during the operation-stopping period of the first load corresponding to each of the at least one state switching.

The operation-stopping period of the first load corresponding to each of the at least one state switching includes the switching time of each of the at least one state switching.

For example, when the electronic device is the air conditioner, the first load is the fan, and the second load is the compressor, the operation-stopping period of the fan is determined when the compressor switches between the turn-on state and the turn-off state. The operation-stopping period of the fan includes the switching time of each of the at least one state switching of the compressor.

For example, when the electronic device is the air conditioner, the first load is the fan, and the second load is the compressor, the operation-stopping period of the fan is determined when the compressor switches between the operation state at the first operation frequency and the operation state at the second operation frequency. The operation-stopping period of the fan includes the switching time of each of the at least one state switching of the compressor.

It should be understood that, since the state switching of the second load may affect the operation state of the first load of the electronic device, stopping the operation of the first load at the switching time of the state switching of the second load is conducive to reducing influence on the operation state of the first load caused by the state switching of the second load. For example, the state switching of the compressor may cause change in a fluid pressure in the air conditioner, which affects the operation state of the fan. With the technical solutions of the embodiments of the present disclosure, the influence on the operation state of the fan caused by the state switching of the compressor can be reduced by stopping operation of the fan in response to the state switching of the compressor.

In an embodiment, the above state switching represents a switching of the second load from the first state into the second state. Accordingly, the determining the operation-stopping period of the first load corresponding to each of the at least one state switching based on the switching time of each of the at least one state switching includes: determining, based on the switching time of each of the at least one state switching, that the operation-stopping period of the first load includes a first predetermined duration before the switching time of each of the at least one state switching and/or a second predetermined duration after the switching time of each of the at least one state switching.

In the embodiment of the present disclosure, the first predetermined duration and the second predetermined duration may be both determined based on historical operation data of the electronic device. The first predetermined duration may be the same as or different from the second predetermined duration.

It should be understood that, stopping operation of the first load during a period including the switching time of the state switching of the second load is advantageous for reducing influence on the operation state of the first load caused by the switching of the second load from the first state into the second state.

In an embodiment, the above state switching represents a switching of the second load from the first state into the second state. Accordingly, the determining the operation-stopping period of the first load corresponding to each of the at least one state switching based on the switching time of each of the at least one state switching includes: determining, based on the switching time of each of the at least one state switching, that the operation-stopping period of the first load includes a third predetermined duration before the switching time of each of the at least one state switching and/or a fourth predetermined duration after the switching time of each of the at least one state switching.

In the embodiment of the present disclosure, the third predetermined duration and the fourth predetermined duration may be both determined based on the historical operation data of the electronic device. The third predetermined duration may be the same as or different from the fourth predetermined duration.

For example, the third predetermined duration may be the same as or different from either of the first predetermined duration and the second predetermined duration. The fourth predetermined duration may be the same as or different from either of the first predetermined duration and the second predetermined duration.

It should be understood that, stopping operation of the first load during a period including the switching time of the state switching of the second load is advantageous for reducing influence on the operation state of the first load caused by the switching of the second load from the first state into the second state.

For example, the above first load is the fan, and the second load is the compressor. Accordingly, the determining the switching time of the at least one state switching based on the operation mode of the electronic device may include: determining, in response to determination that the electronic device is switched from an other operation mode to a defrosting mode, a switching time at which the compressor is switched from the first state into the second state, the other operation mode representing at least one of operation modes of the electronic device other than the defrosting mode; and determining, in response to determination that the electronic device is switched from the defrosting mode to the other operation mode, a switching time at which the compressor is switched from the second state into the first state.

The other operation mode may be the cooling mode, the heating mode, and the like.

In view of the above, according to the embodiments of the present disclosure, how the compressor to perform the state switching may be determined based on the switching of the electronic device between the defrosting mode and the other operation mode to accurately determine the time of the state switching of the compressor, which in turn accurately controls the time at which the fan stops operation, allowing the fan to operate normally.

In an embodiment, the above electronic device further includes a four-way valve configured to switch the operation mode of the electronic device. When the electronic device is the air conditioner, the four-way valve is one of components for switching the operation mode of the air conditioner. For example, when the air conditioner is in the heating mode, the four-way valve needs to be in an energized state; and when the air conditioner is in the defrosting mode, the four-way valve needs to be in a non-energized state.

Accordingly, the above control method of the electronic device may further include: controlling, in response to determination that the electronic device is switched from the other operation mode to the defrosting mode, the four-way valve to be switched from an energized state to a non-energized state in a period during which the compressor is in the second state; and controlling, in response to determination that the electronic device is switched from the defrosting mode to the other operation mode, the four-way valve to be switched from the non-energized state to the energized state in the period during which the compressor is in the second state.

In the embodiments of the present disclosure, the period during which the compressor is in the second state is determined based on the operation mode of the electronic device, and the state switching of the four-way valve is carried out during the period during which the compressor is in the second state. It should be understood that, the compressor in normal operation may cause influence on the switching of the four-way valve. Therefore, in the embodiments of the present disclosure, the switching of the operation state of the four-way valve is performed when the compressor is in the turn-off state or operates at a relatively low frequency. This can facilitate reduction of the influence of the compressor on the switching of the four-way valve, and can facilitate normal performing of the switching of the operation state of the four-way valve.

In an application, the electronic device is the air conditioner. Considering overall operation requirements of the air conditioner, targeted switching control needs to be performed on main control objects of the air conditioner to ensure normal power supply of each of the components of the air conditioner. The main control objects may include the PFC circuit, the fan, the compressor, and the four-way valve.

Considering the above requirements, in the embodiments of the present disclosure, a switching timing of the PFC circuit, the fan, the compressor and the four-way valve can be processed in modes such as the cooling mode, the heating mode, and the defrosting mode, to ensure that the air conditioner can operate normally in each of the modes.

For example, the fan may be turned on under a condition that the PFC circuit is turned on for operation, and may be turned off within "n" seconds prior to and subsequent to the time of the state switching of the compressor, where "n" is a predetermined value.

When the air conditioner enters the defrosting mode, a switching timing different from those in the other modes needs to be generated for the PFC circuit, the fan, the compressor, and the four-way valve.

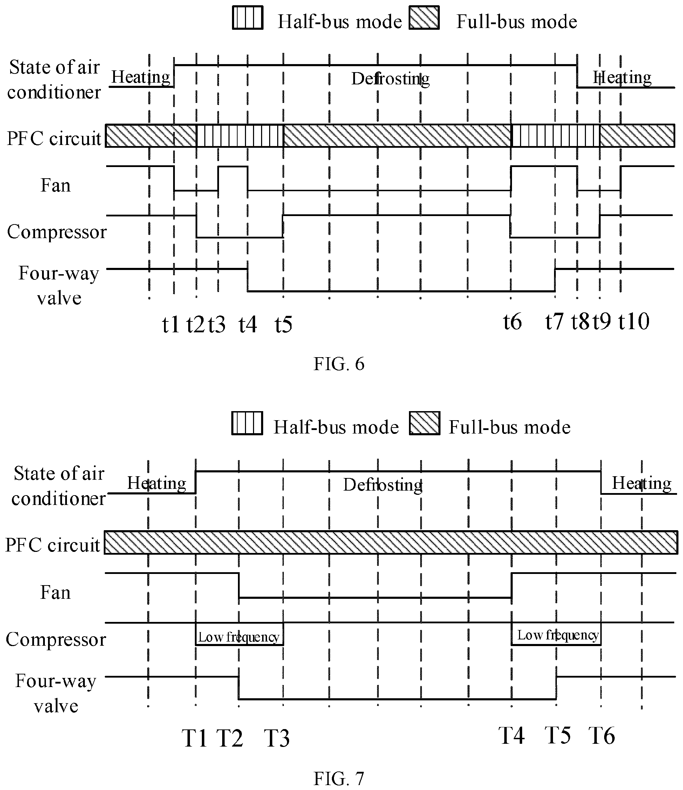

FIG. 6 is a schematic diagram of a switching timing of an air conditioner when switching between a defrosting mode and a heating mode according to an embodiment of the present disclosure. As illustrated in FIG. 6, when the air conditioner is switched from the heating mode to the defrosting mode, the fan is switched from the turn-on state into an operation-stopping state at a time t1, and the compressor is switched from the turn-on state into the turn-off state at a time t2. It can be seen that the fan is in the operation-stopping state in a period prior to the time t2 and a period subsequent to the time t2.

The fan is switched from the operation-stopping state into the turn-on state at a time t3, and is switched from the turn-on state into the operation-stopping state at a time t4. It can be seen that the time t4 is late relative to the time t2. That is, when the air conditioner is switched from the heating mode to the defrosting mode, turning off of the fan is delayed after the compressor is turned off, which facilitates dissipation of heat through the fan.

The compressor is switched from the turn-off state into the turn-on state at a time t5. When it is determined that the air conditioner needs to be switched from the defrosting mode to the heating mode, the fan is switched from the operation-stopping state into the turn-on state and the compressor is switched from the turn-on state into the turn-off state at a time t6. The fan is switched from the turn-on state into the operation-stopping state at a time t8. The compressor is switched from the turn-off state into the turn-on state at a time t9. The fan is switched from the operation-stopping state into the turn-on state at a time t10. It can be seen that the fan is in the operation-stopping state in a period prior to the time t9 and a period subsequent to the time t9. The time t6 is earlier than the time t9, which means that when the air conditioner is switched from the defrosting mode to the heating mode, the fan is turned on before the compressor is turned on, facilitating pre-dissipation of heat through the fan.

The four-way valve is switched from the energized state into the non-energized state at the time t4. It can be seen that the compressor is in the turn-off state at the time t4. The four-way valve is switched from the non-energized state to the energized state at a time t7. It can be seen that the compressor is in the turn-off state at the time t7.

As illustrated in FIG. 6, when the compressor is in the turn-on state, an operation mode of the PFC circuit is a full-bus mode; and when the compressor is in the turn-off state and the fan is in the turn-on state, the operation mode of the PFC circuit is a half-bus mode.

FIG. 7 is another schematic switching timing diagram of an air conditioner when switching between a defrosting mode and a heating mode according to an embodiment of the present disclosure. As illustrated in FIG. 7, when the air conditioner is switched from the heating mode to the defrosting mode, an operation frequency of the compressor is switched from the first operation frequency to the second operation frequency at a time T1, i.e., the compressor operates in a low-frequency operation mode. The fan is switched from the turn-on state into the operation-stopping state at a time T2, and the operation frequency of the compressor is switched from the second operation frequency to the first operation frequency at a time T3. It can be seen that the time T2 is later than the time T1. When the air conditioner is switched from the heating mode to the defrosting mode, turning off of the fan is delayed after the compressor is switched into the state of operating at the second operation frequency, which facilitates the dissipation of heat through the fan.

When it is determined that the air conditioner needs to be switched from the defrosting mode to the heating mode, the fan is switched from the operation-stopping state into the turn-on state and the operation frequency of the compressor is switched to the second operation frequency at a time T4, and the operation frequency of the compressor is switched to the first operation frequency at a time T6. It can be seen that the time T4 is earlier than the time T6. When the air conditioner is switched from the heating mode to the defrosting mode, the fan is turned on before the compressor is switched into the state of operating at the first operation frequency, which facilitates the pre-dissipation of heat through the fan.

The four-way valve is switched from the energized state into the non-energized state at the time T2. It can be seen that the compressor is in a low-frequency operation state at the time T2. The four-way valve is switched from the non-energized state into the energized state at a time T5. It can be seen that the compressor is in the low-frequency operation state at the time T5.

As illustrated in FIG. 7, the operation mode of the PFC circuit is always the full-bus mode when the compressor is in the turn-on state.

The switching control on the above main control objects is performed with reference to the switching timing control illustrated in FIG. 6 and FIG. 7, which can enable normal operation of each of the devices in the air conditioner and improve stability of turn on-off switching of the device.

Computer program instructions corresponding to the control method of the electronic device in this embodiment may be stored on a storage medium, such as an optical disc, a hard disk, and a USB flash disk. When the computer program instructions on the storage medium that correspond to the control method of the electronic device are read or executed by a control apparatus, the control method of the electronic device according to any one of the above embodiments is implemented.

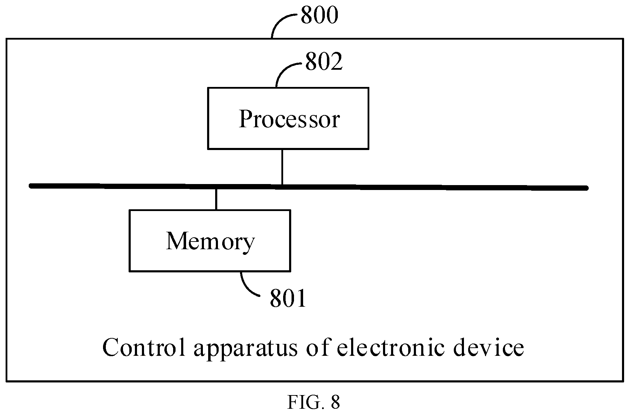

Based on the same technical concept of the above embodiments, reference may be made to FIG. 8. FIG. 8 illustrates a control apparatus 800 of an electronic device provided by an embodiment of the present disclosure. The control apparatus 800 may include a memory 801 and a processor 802. The memory 801 is configured to store a computer program and data. The processor 802 is configured to execute the computer program stored on the memory to implement the control method of the electronic device according to any one of the above embodiments.

In practice, the above memory 801 may be a volatile memory, such as a Random Access Memory (RAM); a non-volatile memory, such as a Read-Only Memory (ROM), a flash memory, a Hard Disk Drive (HDD), or Solid-State Drive (SSD); or a combination of the above memories. The memory 801 is configured to provide instructions and data to the processor 802.

The above processor 802 may be at least one of ASIC, DSP, DSPD, PLD, FPGA, CPU, a controller, a microcontroller, or a microprocessor. It should be understood that for different augmented reality cloud platforms, the electronic device configured to realize functions of the above processors may be other devices. The embodiments of the present disclosure are not specifically limited thereto.

The embodiments of the present disclosure further provide an electronic device. The electronic device may include the above control apparatus 800 of the electronic device, the first load, and the second load.

For example, the electronic device is the air conditioner, the first load is the fan, and the second load is the compressor.

In an embodiment, functions or modules of the device provided by the embodiments of the present disclosure can be configured to perform the method described in the above method embodiments, reference to a specific implementation of which can be made to the description of the method embodiments described above. Details thereof will be omitted here for simplicity.

The foregoing description of the embodiments tends to emphasize differences between the embodiments. Similarities or likenesses between the embodiments can be cross-referenced, and will be omitted herein for simplicity.

The method disclosed in any one of the method embodiments provided in the present disclosure can be combined arbitrarily without any conflict to obtain a new method embodiment.

The features disclosed in any one of the product embodiments provided in the present disclosure can be combined arbitrarily without any conflict to obtain a new product embodiment.

The features disclosed in any one of the method embodiments or device embodiments provided in the present disclosure can be combined arbitrarily without any conflict to obtain a new method embodiment or device embodiment.

In several embodiments provided by the present disclosure, it should be understood that the device and method disclosed can be implemented in other ways. The device embodiments described above are merely exemplary. For example, the units are merely divided based on logic functions. In practical implementation, the units can be divided in other manners. For example, multiple units or components can be combined or integrated into another system, or some features can be omitted or not executed. In addition, mutual coupling or direct coupling or communication connection of components described or discussed can be implemented as indirect coupling or communication connection via interfaces, devices or units, and may be electrical, mechanical, or in other forms.

The units illustrated as separate components may be or not be separated physically, and components shown as units may be or not be physical units, i.e., may be located at a position, or may be distributed onto multiple network units. It is possible to select some or all of the units according to actual requirements, to achieve the objective of solutions of the embodiments.

In addition, the functional units in the embodiments of the present disclosure may be integrated into one processing module, or alternatively be separate units, or two or more units may be integrated into one unit. The integrated unit may be implemented in the form of hardware, or in the form of a combination of hardware and a software functional unit.

It can be appreciated by those skilled in the art that all or part of the steps of the above method embodiments can be implemented by relevant hardware following instructions of a program. The above program can be stored in a computer-readable storage medium. The program is configured to implement, when executed, the steps of the above method embodiments.

While the specific embodiments of the present disclosure have been described above, the scope of the present disclosure is not limited to these embodiments. Various variants and alternatives can be easily conceived by those skilled in the art without departing from the technical scope of the present disclosure. Therefore, these variants and alternatives are to be encompassed by the scope of present disclosure as defined by the claims as attached.

### Industrial Applicability

Embodiments of the present disclosure disclose a control method and control apparatus of an electronic device, an electronic device, a computer storage medium, and a computer program. The control method of the electronic device includes: obtaining an operation mode of the electronic device; determining an operation period of the first load based on the operation mode of the electronic device; and controlling the PFC circuit to output a first half-bus voltage of the half-bus voltages during the operation period of the first load, the first half-bus voltage representing a supply voltage of the first load. The above solution is conducive to achieving three-phase current balance. In addition, since the PFC circuit can be used for harmonic resonance processing, conformity of current harmonics to the standard can be facilitated.

## Claims

1. A control method of an electronic device, applied in a control apparatus of the electronic device, the electronic device representing a device powered by a power factor correction (PFC) circuit, and the electronic device comprising a first load powered by half-bus voltages and a second load powered by a full-bus voltage, the control method comprising:
obtaining an operation mode of the electronic device;
determining an operation period of the first load based on the operation mode of the electronic device; and
controlling the PFC circuit to output a first half-bus voltage of the half-bus voltages during the operation period of the first load, the first half-bus voltage representing a supply voltage of the first load.

2. The control method according to claim 1, further comprising:
determining a switching time of at least one state switching based on the operation mode of the electronic device, the at least one state switching representing switching of the second load between a first state and a second state, the first state and the second state respectively representing a turn-on state and a turn-off state or the first state and the second state respectively representing an operation state at a first operation frequency and an operation state at a second operation frequency, and the second operation frequency being smaller than the first operation frequency;
determining, based on the switching time of each of the at least one state switching, an operation-stopping period of the first load corresponding to each of the at least one state switching, the operation-stopping period of the first load corresponding to each of the at least one state switching comprising the switching time of each of the at least one state switching; and
controlling the first load to stop operation during the operation-stopping period of the first load corresponding to each of the at least one state switching.

3. The control method according to claim 2, wherein the state switching represents switching of the second load from the first state into the second state; and
said determining, based on the switching time of each of the at least one state switching, the operation-stopping period of the first load corresponding to each of the at least one state switching comprises:
determining, based on the switching time of each of the at least one state switching, that the operation-stopping period of the first load comprises a first predetermined duration before the switching time of each of the at least one state switching and/or a second predetermined duration after the switching time of each of the at least one state switching.

4. The control method according to claim 2, wherein the state switching represents switching of the second load from the second state into the first state; and
said determining, based on the switching time of each of the at least one state switching, the operation-stopping period of the first load corresponding to each of the at least one state switching comprises:
determining, based on the switching time of each of the at least one state switching, that the operation-stopping period of the first load comprises a third predetermined duration before the switching time of each of the at least one state switching and/or a fourth predetermined duration after the switching time of each of the at least one state switching.

5. The control method according to any one of claims 2 to 4, wherein the first load is a fan, and the second load is a compressor; and
said determining the switching time of the at least one state switching based on the operation mode of the electronic device comprises:
determining, in response to determination that the electronic device is switched from an other operation mode to a defrosting mode, a switching time at which the compressor is switched from the first state into the second state, the other operation mode representing at least one of operation modes of the electronic device other than the defrosting mode; and
determining, in response to determination that the electronic device is switched from the defrosting mode to the other operation mode, a switching time at which the compressor is switched from the second state into the first state.

6. The control method according to claim 5, wherein the electronic device comprises a four-way valve configured to switch the operation mode of the electronic device; and
the control method further comprises:
controlling, in response to determination that the electronic device is switched from the other operation mode to the defrosting mode, the four-way valve to be switched from an energized state to a non-energized state in a period during which the compressor is in the second state; and
controlling, in response to determination that the electronic device is switched from the defrosting mode to the other operation mode, the four-way valve to be switched from the non-energized state to the energized state in the period during which the compressor is in the second state.

7. A control apparatus of an electronic device, the control apparatus comprising:
a memory;
a processor; and
a computer program stored on the memory and executable by the processor,
wherein the processor is configured to implement, when executing the computer program, the control method according to any one of claims 1 to 6.

8. An electronic device, comprising:
the control apparatus according to claim 7;
the first load powered by the half-bus voltages; and
the second load powered by the full-bus voltage.

9. The electronic device according to claim 8, wherein the electronic device is an air conditioner;
the first load is a fan; and
the second load is a compressor.

10. A computer storage medium, having at least one program stored thereon, wherein the at least one program is executable by at least one processor to implement the control method according to any one of claims 1 to 6.

11. A computer program, comprising a computer-readable code, wherein when the computer-readable code runs on a control apparatus of an electronic device, a processor of the control apparatus of the electronic device performs the control method according to any one of claims 1 to 6.
